# EUROPEAN PATENT SPECIFICATION

(11) **EP 1 480 421 B1**
(45) Date of publication and mention of the grant of the patent: **19.12.2007**
(21) Application number: 03011447.4
(22) Date of filing: 20.05.2003
(51) Int. Cl.: H04M 1/247, G06F 3/023

(54) **Automatic setting of a keypad input mode in response to an incoming text message**
Automatische Einstellung der Betriebsartauswahl in Abhängigkeit von einer ankommenden Nachricht
Détermination automatique d'un mode d'introduction par clavier en réponse à un message texte entrant

(43) Date of publication of application: 24.11.2004
(73) Proprietor: Sony Ericsson Mobile Communications AB, 221 88 Lund (SE)
(72) Inventor: Camuffo, Andrea, Sony Ericsson Mobile Com. Int. AB, 85609 Aschheim-Dornach (DE)
(74) Representative: Körber, Martin Hans

(56) References cited:
- EP-A- 1 168 859
- EP-A- 1 255 184
- US-A1- 2002 095 288

## Description

The present invention relates to a control of the keypad input mode for characters on mobile terminals, particularly to a respective control in response to an incoming text message that comprises a mix of words originating from different languages.

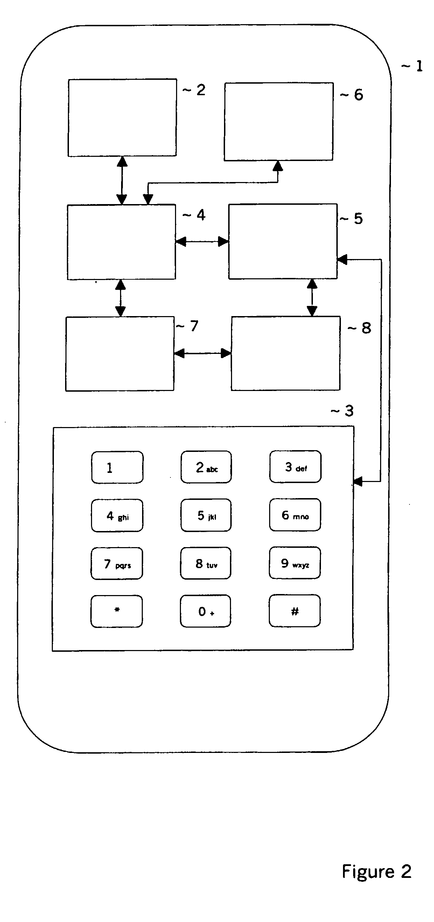

Text entry on mobile terminals, like e.g. a personal digital assistant or a mobile phone is typically based on a standard telephone keypad. The telephone keypad consists of number keys and additional symbol keys with a respective multiple assignation of characters, numbers and/or symbols to allow an entry of text in an alphabetic input mode. The characters a to z and some special characters are hereto spread over a subset of the keys. As an alphabet comprises typically at least 26 characters, three to four characters are grouped on each key resulting in an ambiguous input system. An example for a respective keypad is shown in Fig. 2.

Currently, two different key input modes are typically used on mobile terminals to overcome the ambiguity associated with multiple assigned keys.

The first, which is usually referred to as Multitap or multitap-mode is a general purpose text input method where a user presses each key one or more times to specify the desired character. A key being assigned the characters m, n, and o will have for instance to be pressed once to obtain the character m, twice for character n, and three times for the character o. Problems arise when one character has to be inputted twice or two consecutively inputted characters are provided on the same key. After having entered the first character, a user will usually have to wait for a certain period or will have to press a special key before being able to enter the second character. Although each character is accurately defined, the multitap-mode is generally not well liked by users of a mobile terminal as it is slow and inefficient.

Another way to overcome the ambiguity is to add a dictionary to the system and compare each key input sequence with the words stored in the dictionary to guess the intended word. A respective key input mode technique is known as dictionary-based disambiguation. Commercial examples for this type of text input mode are for instance the T9, eZiText, and iTAP text input models. With dictionary-based disambiguation, each key is pressed only once, thus improving the text input rate.

The guess of the intended text input is based on the probability by which a certain key input sequence corresponds to a certain word. This probability is language dependent. The key input sequence 2-8-3 will, assumed the characters a, b, and c are assigned to key 2, t, u, and v to key 8, and d, e, and f to key 3 most probably result in the word 'bud' when an English dictionary is taken as a basis and 'auf' (means e.g. on) when a German dictionary is used. Therefore, each language requires its own dictionary-based disambiguation model. A dictionary-based disambiguation model comprises not only the dictionary itself but at least also the probabilities, by which each word of the dictionary can be assigned to a certain key input sequence.

Many users of mobile terminals, particularly those who use it for business purposes have to communicate with different parties in different languages. To successfully use the dictionary-based disambiguation technique for text input in various languages, a special dictionary-based disambiguation model has to be available for each language used. When writing a text message like e.g. instance an SMS (text message with Short Message Service) or an MMS (text message with Multimedia Messaging Service) to another party, a user typically writes this message in a language which he prefers for a communication with this party. If this language is different from the one used for text input before, the user is currently required to manually select the appropriate dictionary-based disambiguation model for the new language prior to writing the message. As this is often forgotten, particularly under stress situations, the key input sequences are frequently misinterpreted by the wrongly active dictionary-based disambiguation model.

This can be extremely annoying particularly when just replying to a text message received before in the language predominant in the received text message.

The European Patent Application EP 1 255 184 A2 discloses a method of automatically setting the language of a predictive text editor when replying to a previously received text message, wherein the language of the received text message is determined based on dictionaries. When a certain percentage of the message's words can be found in a dictionary, the language of the predictive text editor is set to the language corresponding to the dictionary. In case that the certain percentage of the message's words can not be found in any dictionary, the user is invited to set the language manually or to use multi-tapping for text entry.

The United States Patent Application US2002/0095288 A1 discloses a method of determining the language of a text message received by a mobile communications device in order to provide language appropriate speech outputting of the received message. The language determination is based on stored Discrete Markov Models of languages or, alternatively, dictionary-based language models. The method determines the language of a received text message, by evaluating the conformance of each language model stored in the device with the received text message. The language relating to the language model evaluated best is selected to be the language used in speech outputting.

It is therefore an object of the present invention to provide an automatic control of the keypad input mode on a mobile terminal which complies to the language predominant in a text message that comprise a mix of words originating from different languages and to which a reply is drawn up.

This object is achieved by a method for automatically setting a keypad input mode on a mobile terminal when replying to a received text message that comprises a mix of words originating from different languages, the method comprising a step of determining the most probable predominant language in the received text message wherein all members of a set of language models stored on the mobile terminal, each model related to one language, are evaluated in their conformance with the received text message and the language related to the language model evaluated best is selected to be the most probable predominant language, a step of checking if the language model related to the determined most probable predominant language fulfils minimum requirements concerning its conformance with the received text message and a step of setting the keypad input mode to a dictionary-based disambiguation mode which is based on a disambiguation model related to said most probable predominant language when the minimum requirements are met or setting the keypad input mode to a multitap-modewhen the minimum requirements are not met or no disambiguation model related to said most probable predominant language is available.

The above object is further achieved by a computer software product comprising a series of state elements which are adapted to be processed by a data processing means of a mobile terminal such, that a method according to the present is executed.

The above object is also achieved by a mobile terminal with a receiving means for receiving a text message that comprises a mix of words originating from different languages, a keypad having at least one key to which more than one character is assigned for alphabetic input, a storage means for storing at least one disambiguation model, a language determination means for determining the most probable predominant language in the text message received, a reliability control means for reviewing the reliability of the language determined, and a keypad control means for controlling at least the keypad input mode of the mobile terminal dependent on the language determined by the language determination means and the reliability control means in accordance with a method according to one of the claims 1 to 3.

The probability of correctly guessing a word intended by entering a certain key sequence is advantageously high when using a disambiguation model formed by the T9, eZiText or iTAP text input method. As most providers support SMS and MMS services, text messages in one of these type are preferred.

In a preferred embodiment of the present invention, the mobile terminal includes a network access means for accessing a network resource for expanding the resources used for a correct language determination beyond those available on the mobile terminal only. The network access means may thereto advantageously be adapted to automatically establish a respective network link based on a short range wireless network technology and/or by means of a communication link based network link technology.

In the following, the present invention is described in detail with respect to special embodiments and in relation to the enclosed figures, wherein
- Figure 1: is a flowchart showing the method steps of an embodiment of the present invention, and
- Figure 2: is a schematic representation of a mobile terminal according to the present invention.

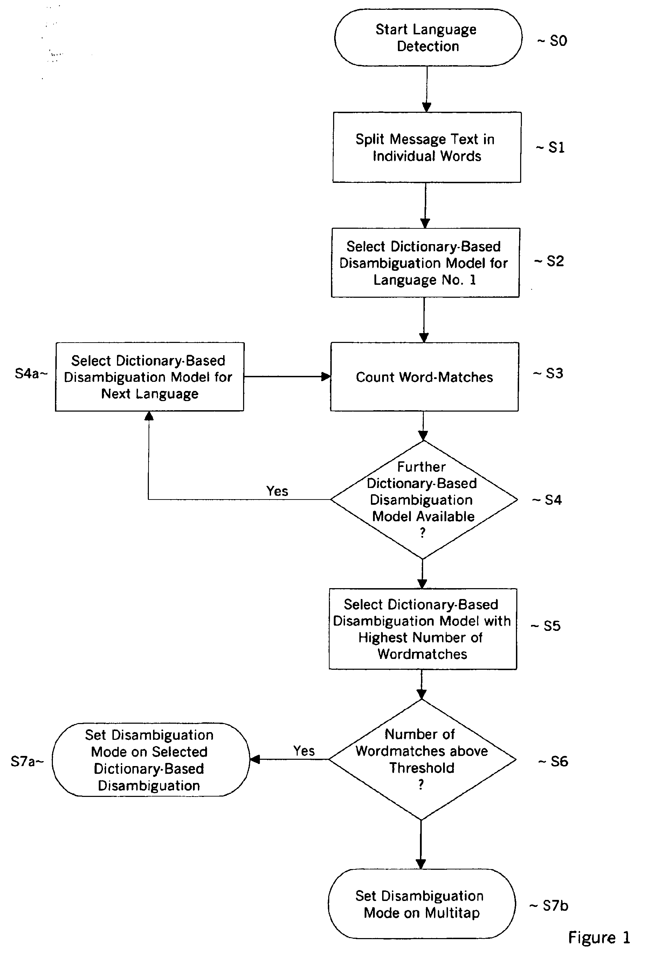

Figure 1 illustrates the basic steps of a procedure according to an embodiment of the present invention where the analysis of the predominant language of a received text message is based on comparing words from the text with the content of dictionary-based disambiguation models. A dictionary-based disambiguation model is sometimes also referred to as language model.

After the procedure is started in step S0, the text to be analysed is split into the individual words contained in it in step S1. These individualised words are then one after another looked up in a dictionary of each language model whereby the word-matches are counted and registered. Hereto, a first dictionary-based disambiguation model available on the mobile terminal is selected in step S4 and the detected word-matches are counted in step S3. If more language models are available on the mobile terminal, which is checked for in step S4, a further dictionary-based disambiguation model is selected in step S4a followed by a summing up of word-matches based on this. As long as further language models are available, the process of selecting a new language model and counting the words matching the content of its respective dictionary, that is steps S4a and S3 are repeated. The language model with the highest count of word-matches is then selected in step S5 as the one which most probably represents the language predominant in the text.

For text messages with a mix of words originating from different languages or a lot of a la mode abbreviations, the reliability of the language determination according to step S2 to S5 may be poor. The result therefore has to be checked if it fulfils a minimum requirement. To this effect, the highest number of word-matches found for one language model is compared to a threshold value in step S6. If the word-match count is above that threshold, the keypad input mode is set to the corresponding language model or dictionary-based disambiguation mode, respectively, in step S7a. Else, it is set to multitap mode in step 7b.

The described language recognition system may be modified, e.g. by using other language recognition systems. US 2002/0095288 A1 for instance discloses a language detection based on a Discrete Markov Model, which analyses the transition probabilities between consecutive characters. As these probabilities are strongly language dependent, the language used predominantly in a text can be guessed. In the system proposed in EP 0 984 427 A2 certain keywords like e.g. "Dear", "Egregi", "geehrt" or the like are used to determine the language of a text message.

A method with the procedures described may be realised as a software implemented control of a mobile terminal. The software may be stored in a data storage of the mobile terminal or separate from it on a different data carrier which can be accessed from the mobile phone if desired.

Currently, most providers offer messaging services based on SMS or MMS. As the present invention is not restricted to the type of messaging service, it may also be applied to messages of different technologies as long a the messages contain text.

Figure 2 is a schematic block diagram showing the components required for a mobile terminal 1 according to the present invention. It is to be noted that only those components necessary for the understanding of the present invention are shown. Other components required for the operation of the mobile terminal 1, like a display, antenna, transmitter or the like have been omitted for the sake of a clear illustration.

The mobile terminal 1 has a receiving means 2 for receiving text messages. It further includes a keypad 3 formed by an array of keys which are usually used for entering a number or special characters. Further keys may also be provided to control certain functions on the mobile terminal 1. In text mode, some keys have a further assignment, whereby at least on one key more than one characters are grouped. The language determination means 4 of the mobile terminal 1 determines the language which is predominant in a text message received by the receiving means 2 according to a procedure described above. The keypad control unit 5 controls the operation of the keypad 3 such, that the actual keypad input mode corresponds to the language determined by the language determination means 4 from the text message received according to a procedure described above.

A reliability control means 7 reviews the result from the language determination means 4. It performs a minimum requirement check to ensure that the language determination is reliable. A respective check is also useful for messages containing a lot of terms from different languages as is very often the case for technical descriptions. But also messages with many à la mode abbreviations may lead to a misinterpretation of the language predominant in the respective text. The minimum requirement check may be based on semantic models or on a threshold value for word-matches found for the guessed language like e.g. described above.

Usually, a dictionary of a dictionary-based disambiguation model is stored in a storage unit 6 of the mobile terminal 1 itself. Due to the limited storage capacity on some mobile terminals 1, only one or two language models may be available on the mobile terminal 1 itself. According to an advantageous development of the present invention, a network access unit 8 is provided on the mobile terminal which enables an automatic set-up of a network link when no appropriate language model is found on the mobile terminal itself. Thus, the network access unit 8 expands the resources of the mobile terminal 1 by making dictionaries and/or a complete language models found on network resources external to the mobile terminal 1 available for use by the language determination means 4 as well as the keypad control unit 5. A respective network link may be established as a communication link to the communication network of a provider to access e.g. web resources on the basis of the wireless application protocol (WAP). But preferably also a short range wireless link to a private or company network for instance by means of Bluetooth or infrared technology is used to benefit from local network resources in the vicinity of the mobile terminal, which is particularly useful as such a network may provide the language models which are preferably used in context with the respective work environment.

## Claims

1. A method for automatically setting a keypad input mode on a mobile terminal when replying to a received text message that comprises a mix of words originating from different languages, the method comprising a step of determining the most probable predominant language in the received text message wherein all members of a set of language models stored on the mobile terminal, each model related to one language, are evaluated in their conformance with the received text message and the language related to the language model evaluated best is selected to be the most probable predominant language, a step of checking if the language model related to the determined most probable predominant language fulfils minimum requirements concerning its conformance with the received text message and a step of setting the keypad input mode to a dictionary-based disambiguation mode which is based on a disambiguation model related to said most probable predominant language when the minimum requirements are met or setting the keypad input mode to a multitap-mode when the minimum requirements are not met or no disambiguation model related to said most probable predominant language is available.

2. Method according to claim 1,
**characterised in**
**that** the disambiguation model is formed by a T9 text input system, eZiText text input system or iTAP text input system.

3. Method according to claim 1 or 2,
**characterised in**
**that** the text message is of an SMS or MMS type.

4. A Computer software product comprising a series of state elements which are adapted to be processed by a data processing means of a mobile terminal such, that a method according to one of the claims 1 to 3 may be executed thereon.

5. A mobile terminal with
- a receiving means (2) for receiving a text message that comprises a mix of words originating from different languages,
- a keypad (3) having at least one key to which more than one character is assigned for alphabetic input,
- a storage means (6) for storing at least one disambiguation model,
- a language determination means (4) for determining the most probable predominant language in the text message received,
- a reliability control means (7) for reviewing the reliability of the language determined, and
- a keypad control means (5) for controlling at least the keypad input mode of the mobile terminal dependent on the language determined by the language determination means and the reliability control means in accordance with a method according to one of the claims 1 to 3.

6. A mobile terminal according to claim 5,
**characterised in**
**that** the mobile terminal (1) comprises a network access means (8) for accessing a network resource.

7. A mobile terminal according to claim 5 or 6,
**characterised in**
**that** the network access means (8) is based on a short range wireless network link technology and/or a communication link based network link technology.

## Patentansprüche

1. Verfahren zum automatischen Einstellen eines Tastatureingabemodus auf einem mobilen Endgerät, wenn auf eine empfangene Textnachricht geantwortet wird, welche eine Mischung von Wörtern aufweist, die von unterschiedlichen Sprachen herstammen, wobei das Verfahren einen Schritt zum Bestimmen der am wahrscheinlichsten vorherrschenden Sprache in der empfangenen Textnachricht aufweist, wobei alle Teile eines Satzes von Sprachmodellen, welche im mobilen Endgerät gespeichert sind, wobei jedes Modell auf eine Sprache bezogen ist, hinsichtlich ihrer Übereinstimmung mit der empfangenen Textnachricht ausgewertet werden und die Sprache, welche auf das Sprachmodell bezogen ist, die als beste ausgewertet ist, ausgewählt wird, die am wahrscheinlichsten vorherrschende Sprache zu sein, einen Schritt zum Prüfen, ob das Sprachmodell bezogen auf die bestimmte wahrscheinlichste vorherrschende Sprache minimale Erfordernisse betreffend deren Übereinstimmung mit der empfangenen Textnachricht erfüllt, und einen Schritt zum Einstellen des Tastatureingabemodus auf einen Unzweideutigkeitsmodus auf Wörterbuchbasis, der auf einem Unzweideutigkeitsmodell bezogen auf die am wahrscheinlichsten vorherrschende Sprache basiert, wenn die minimalen Erfordernisse erfüllt werden, oder zum Einstellen des Tastatureingabemodus auf einen Mehrfachdrückmodus, wenn die minimalen Erfordernisse nicht erfüllt werden oder kein Unzweideutigkeitsmodell bezogen auf die am wahrscheinlichsten vorherrschende Sprache verfügbar ist.

2. Verfahren nach Anspruch 1,
**dadurch gekennzeichnet, dass**
das Unzweideutigkeitsmodell durch ein T9-Texteingabesystem, ein eZiText-Texteingabesystem oder ein iTAP-Text-Eingabesystem gebildet ist.

3. Verfahren nach Anspruch 1 oder 2,
**dadurch gekennzeichnet, dass**
die Textnachricht eine SMS- oder MMS-Nachricht ist.

4. Computer-Softwareprodukt, welches eine Reihe von Zustandselementen aufweist, welche eingerichtet sind, durch eine Datenverarbeitungseinrichtung eines mobilen Endgeräts verarbeitet zu werden, so dass ein Verfahren nach einem der Ansprüche 1 bis 3 dafür ausgeführt werden kann.

5. Mobiles Endgerät, mit
- einer Empfangseinrichtung (2) zum Empfangen einer Textnachricht, welche eine Mischung von Wörtern aufweist, welche von unterschiedlichen Sprachen herstammen,
- einer Tastatur (3), welche zumindest eine Taste hat, der mehr als ein Zeichen für alphabetische Eingabe zugeordnet ist,
- einer Speichereinrichtung (6) zum Speichern zumindest eines Unzweideutigkeitsmodells,
- einer Sprachbestimmungseinrichtung (4) zum Bestimmen der am wahrscheinlichsten vorherrschenden Sprache in der empfangenen Textnachricht,
- einer Verlässlichkeitssteuereinrichtung (7) zum Überprüfen der Verlässlichkeit. der bestimmten Sprache, und
- einer Tastatursteuereinrichtung (5) zum Steuern zumindest des Tastatureingabemodus des mobilen Endgeräts in Abhängigkeit von der Sprache, welche durch die Sprachbestimmungseinrichtung und die Verlässlichkeitssteuereinrichtung gemäß einem Verfahren nach einem der Ansprüche 1 bis 3 bestimmt wird.

6. Mobiles Endgerät nach Anspruch 5,
**dadurch gekennzeichnet, dass**
das mobile Endgerät (1) eine Netzwerkzugriffseinrichtung (8) aufweist, um auf eine Netzwerk-Ressource zuzugreifen.

7. Mobiles Endgerät nach Anspruch 5 oder 6,
**dadurch gekennzeichnet, dass**
die Netzwerkzugriffseinrichtung (8) auf einer Kurzbereichs-Drahtlos-Netzwerkverbindungstechnologie und/oder einer Kommunikationsverbindung auf Basis der Netzwerkverbindungstechnologie basiert.

## Revendications

1. Procédé de paramétrage automatique d'un mode de saisie d'un clavier sur un terminal mobile, lors de la réponse à un message de texte reçu qui comprend un mélange de mots issus de différentes langues, le procédé comprenant une étape consistant à déterminer la langue prédominante la plus probable dans le message de texte reçu, où tous les éléments d'un ensemble de modèles de langues, stockés sur le terminal mobile, chaque modèle étant lié à une langue, sont évalués en termes de conformité avec le message de texte reçu et la langue liée au modèle de langue obtenant la meilleure évaluation est sélectionnée pour être la langue prédominante la plus probable, une étape consistant à vérifier si le modèle de langue lié à la langue prédominante déterminée comme la plus probable satisfait des exigences minimales touchant à sa conformité avec le message de texte reçu et une étape consistant à paramétrer le mode de saisie du clavier en mode de désambiguïsation avec dictionnaire, qui est fondé sur un modèle de désambiguïsation lié à ladite langue prédominante la plus probable, lorsque les exigences minimales sont satisfaites, ou bien paramétrer le mode de saisie du clavier en mode à frappes multiples lorsque les exigences minimales ne sont pas satisfaites ou aucun modèle de désambiguïsation lié à ladite langue prédominante la plus probable n'est disponible.

2. Procédé selon la revendication 1, **caractérisé en ce que** le modèle de désambiguïsation est formé d'un système de saisie de texte T9, d'un système de saisie de texte eZiText ou d'un système de saisie de texte iTAP.

3. Procédé selon la revendication 1 ou 2, **caractérisé en ce que** le message de texte est du type SMS ou MMS.

4. Progiciel d'ordinateur comprenant une série d'éléments d'état qui sont conçus pour être traités par un moyen de traitement de données d'un terminal mobile si bien qu'un procédé selon l'une des revendications 1 à 3 peut y être exécuté.

5. Terminal mobile comprenant :
- un moyen de réception (2), destiné à recevoir un message de texte qui comprend un mélange de mots issus de différentes langues ;
- un clavier (3) possédant au moins une touche à laquelle plus d'un caractère est assigné pour la saisie alphabétique ;
- un moyen de stockage (6), destiné à stocker au moins un modèle de désambiguïsation ;
- un moyen de détermination de langue (4), destiné à déterminer la langue prédominante la plus probable dans le message de texte reçu ;
- un moyen de contrôle de fiabilité (7), destiné à examiner la fiabilité de la langue déterminée ; et
- un moyen de commande de clavier (5), destiné à commander au moins le mode de saisie du clavier du terminal mobile en fonction de la langue déterminée par le moyen de détermination de langue et le moyen de contrôle de fiabilité, suivant un procédé selon une des revendications 1 à 3.

6. Terminal mobile selon la revendication 5,
**caractérisé en ce que** le terminal mobile (1) comprend un moyen d'accès au réseau (8) pour accéder à une ressource du réseau.

7. Terminal mobile selon la revendication 5 ou 6, **caractérisé en ce que** le moyen d'accès au réseau (8) est fondé sur une technologie de liaison au réseau sans fil à courte portée et/ou sur une technologie de liaison au réseau de type liaison de communication.
